# EUROPÄISCHE PATENTSCHRIFT

(11) **EP 3 870 387 B1**
(45) Veröffentlichungstag und Bekanntmachung des Hinweises auf die Patenterteilung: **07.09.2022**
(21) Anmeldenummer: 19794923.3
(22) Anmeldetag: 21.10.2019
(51) Int. Cl.: B23K 26/382

(54) **VERFAHREN ZUM LASERBOHREN EINES BAUTEILS**
METHOD FOR LASER DRILLING A COMPONENT
PROCÉDÉ DE PERÇAGE AU LASER D'UN COMPOSANT

(30) Priorität: 25.10.2018 DE 102018218261
(43) Veröffentlichungstag der Anmeldung: 01.09.2021
(73) Patentinhaber: Robert Bosch GmbH, 70442 Stuttgart (DE)
(72) Erfinder: STADLER, Frank, 70469 Stuttgart-Feuerbach (DE)
(86) Internationale Anmeldenummer: PCT/EP2019/078520
(87) Internationale Veröffentlichungsnummer: WO 2020/083816

(56) Entgegenhaltungen:
- WO-A1-2017/151122
- DE-A1-102013 218 196
- US-A- 3 527 198

## Beschreibung

### Stand der Technik

Die Erfindung geht aus von einem Verfahren zum Laserbohren eines Bauteils, insbesondere einer Einspritzdüse.

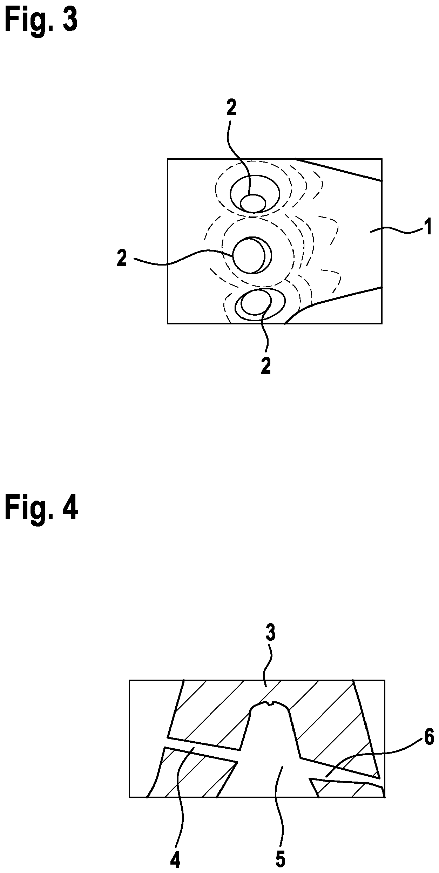

Bei der Laserbearbeitung von Bauteilen, insbesondere von rotationssymmetrisch ausgebildeten Bauteilen wie Einspritzdüsen, stellt sich das Problem Bauteilflächen, die einer gerade in Bearbeitung befindlichen Bauteilwandung gegenüberliegen, gegenüber der Laserstrahlung abzuschirmen bzw. zu schützen. Dazu wird beim Stand der Technik üblicherweise in einen Hohlraum des zu bearbeitenden Bauteils eine Schutzvorrichtung während der Bearbeitungsphase des Laserbohrens eingeführt, mit welcher der am Ende des Bohrvorgangs aus dem in der Bauteilwandung an der Bohrlochrückseite austretende Laserstrahl blockiert wird. Exemplarisch zeigt dazu Fig. 3 in einer Draufsicht einen Ausschnitt einer aus Metall gebildeten herkömmlichen Schutzvorrichtung 1, die trotz bestimmungsgemäßem Gebrauch in einem Hohlraum einer Dieseldüse mehrere Durchschlagslöcher 2 aufgrund von Laserstrahlung mit Laserpulsen typischerweise im Pikosekundenbereich aufweist, welche von einem aus der Bohrlochrückseite austretenden Laserstrahl herrühren. Eine derart beschädigte Schutzvorrichtung besitzt somit keinerlei Schutzfunktion mehr. Fig. 4 zeigt exemplarisch einen kopfseitigen Teil einer Dieseldüse 3 in Längsschnittdarstellung, bei der linksseitig ein Spritzloch mittels ultrakurzer Laserpulse aus einer Laserquelle ausgebohrt ist und die rechtsseitige Wandung, welche der Rückseite des mittels Laserstrahlung ausgebohrten Spritzlochs 4 gegenüberliegt, infolge des Versagens der während der Laserbearbeitung in den Hohlraum 5 eingeführten Schutzvorrichtung eine Beschädigung 6 in Form eines Durchschusses aufweist. Mithin unterliegen derartige Schutzvorrichtungen einem mehr oder minder ausgeprägten Abnutzungseffekt, der die effektive Verwendungsdauer solcher Schutzvorrichtungen limitiert. Bei nicht rechtzeitiger oder turnusmäßiger Auswechslung einer solchen Schutzvorrichtung kann dies zu einer erhöhten Ausschussrate in der Fertigungsstraße führen.

Aus der DE 10 2011 079 815 A1 ist eine Schutzvorrichtung zur Laserbearbeitung von Löchern in einem Bauteil mittels Laserstrahlung bekannt. Dabei ist die Schutzvorrichtung in Strahlrichtung hinter dem strahlaustrittsseitigen Ende eines zu bearbeitenden Lochs in der Bauteilwandung positionierbar, um einen daran angrenzenden Rückraum mit einer dem Loch gegenüberliegenden Bauteilwandung des Bauteils gegenüber dem einfallenden Laserstrahl zu schützen. Die Schutzvorrichtung ist aus einem Verbund aus einer Matrix aus Polyetheretherketon-Kunststoff und darin eingebetteten Fasern gebildet, wobei die Fasern so eingebettet sind, dass sie bezüglich ihrer jeweiligen Fasererstreckungsrichtung in dem Kunststoff kreuz und quer zueinander verlaufen und in dem Volumen des Kunststoffs der Schutzvorrichtung mit etwa gleichmäßiger Dicke verteilt sind. Die Fasern sind als Glas- oder Carbonfasern zum Aufspalten des in den Verbund eindringenden Laserstrahls und dessen Energiedichtereduzierung ausgeführt.

Aus der DE10 2013 218 196 A1 ist ein Verfahren zum Laserbohren eines Bauteils, insbesondere einer Einspritzdüse, welche einen Hohlraum aufweist, mit folgenden Verfahrenschritten bekannt:
- Bilden eines metallisch oder halbmetallisch ausgebildeten Fluids in Form eines flüssigen Metalls oder eines flüssigen Trägermaterials mit metallischen oder halbmetallischen Partikeln,
- Einspritzen des Fluids in den Hohlraum,
- Bohren eines Lochs in eine den Hohlraum begrenzende Wandung des Bauteils mittels wenigstens eines Laserstrahls, wobei der Laserstrahl nach Ausbilden des Lochs von dem Fluid absorbiert wird,
- Abführen des Fluids aus dem Hohlraum nach Beenden des Laserbohrens.

Zum Bilden des metallisch und/oder halbmetallisch ausgebildeten Fluids wird dabei ein Metall mit niedrigem Schmelzpunkt, nämlich Gallium, ausgewählt. Der Schmelzpunkt von Gallium kommt mit ca. 30°C für ein Metall zwar bereits niedrig zu liegen, liegt aber immer noch oberhalb einer typischen Raumtemperatur von 20°C. Unmittelbare Konsequenz hieraus wäre somit, das Bauteil sowohl während der Laserbearbeitung zur Aufrechterhaltung des flüssigen Aggregatzustandes des Gallium-Fluides als auch während einer anschließenden Reinigung zur Aufrechterhaltung des flüssigen Aggregatzustandes eventueller Rückstände des Gallium-Fluides auf über 30°C erwärmen zu müssen.

### Vorteile der Erfindung

Das Verfahren mit den Merkmalen des Hauptanspruchs hat demgegenüber den Vorteil, dass als Fluid eine Legierung ausgewählt wird. Eine als Fluid ausgewählte Legierung ermöglicht bezüglich der Wahl einer geeigneten Schmelztemperatur einen größeren Freiheitsgrad. Mithilfe einer Legierung lässt sich auch eine Schmelztemperatur unterhalb von 30°C einstellen.

Vorteilhafte Weiterbildungen und Ausgestaltungen der Erfindung ergeben sich durch die in den Unteransprüchen aufgeführten Maßnahmen.

Vorteilhaft ist es, wenn die Zusammensetzung der Legierung abhängig von einem vorgegebenen oberen Grenzwert der Schmelztemperatur des Fluides gewählt wird. Auf diese Weise lässt sich ein Bereich des Verhältnisses der Legierungsbestandteile bestimmen, innerhalb dessen der vorgegebene obere Grenzwert durch die Schmelztemperatur der entsprechenden Legierungszusammensetzung eingehalten wird und der somit für die Bildung des Fluides in Frage kommt.

Vorteilhafterweise wird der vorgegebene obere Grenzwert nicht größer als 45°C, vorzugsweise nicht größer als 30°C, insbesondere nicht größer als 20°C, gewählt. Somit wird sichergestellt, dass der flüssige Aggregatzustand des Fluides im Bereich der Raumtemperatur vorliegt.

Besonders vorteilhaft ist es, wenn die Zusammensetzung der Legierung im Bereich ihres Eutektikums gewählt wird. Auf diese Weise lässt sich ein Minimum der Schmelztemperatur für die gewählte Legierung einstellen.

Vorteilhaft ist auch, wenn die Zusammensetzung der Legierung abhängig von einem minimalen Durchmesser in einem Leitungssystem zum Bereitstellen und zur Abfuhr des Fluids 16 gewählt wird. Auf diese Weise können auch Legierungszusammensetzungen gewählt werden, deren Schmelztemperatur oberhalb des vorgegebenen oberen Grenzwertes liegen, solange sie bei der Temperatur des vorgegebenen oberen Grenzwertes eine Schmelze mit festen Bestandteilen aufweisen, deren Durchmesser kleiner als der minimale Durchmesser im Leitungssystem ist. Somit wird der Bereich der Legierungszusammensetzungen, die als Fluid geeignet sind, erweitert.

Vorteilhaft ist es, wenn als Legierung eine Gallium-Legierung gewählt wird. Dies ermöglicht Schmelztemperaturen unter 20°C.

Vorteilhaft ist dabei die Wahl der Gallium-Legierung als binäre Gallium-Legierung.

Besonders vorteilhaft ist die Wahl der binären Gallium-Legierung als eine Gallium-Indium-Legierung. Dadurch lässt sich eine Schmelztemperatur von bis zu 15°C realisieren.

In vorteilhafter Weise kann die Gallium-Legierung zur Erzielung besonders niedriger Schmelztemperaturen auch als ternäre Gallium-Legierung gewählt werden.

Vorteilhaft ist in diesem Zusammenhang die Wahl der ternären Gallium-Legierung als eine Gallium-Indium-Zinn-Legierung. Auf diese Weise ist eine Schmelztemperatur von bis zu -19°C realisierbar.

Vorteilhafter Weise wird die Legierung vor dem Einspritzvorgang in einen flüssigen Aggregatzustand durch Aufschmelzen gebracht.

Vorteilhaft ist weiterhin, dass vor dem Einspritzvorgang wenigstens eine Durchgangsbohrung in die Wandung des Bauteils ausgebildet wird, welche zum Durchführen des Fluids durch den Hohlraum dient und nach Beenden des Laserbohrens wieder verschlossen wird. Auf diese Weise findet ein Abnutzungseffekt wie bei herkömmlichen Schutzvorrichtungen praktisch nicht statt, da das Fluid prinzipiell kontinuierlich erneuerbar ist, indem das Fluid durch den Hohlraum des zu bearbeitenden Bauteils strömen kann und eine ständige Durchströmung des Hohlraums während des Prozesses aufrechterhalten wird. Mithin bietet das erfindungsgemäße Verfahren einen dauerhaften und zuverlässigen Schutz des zu bearbeitenden Bauteils vor einer unerwünschten Beschädigung durch die Laserstrahlung, insbesondere wenn Laser hoher Leistung mit ultrakurzen Pulsen beispielsweise im Pikosekundenbereich oder kürzer eingesetzt werden.

Vorteilhafterweise wird die Durchgangsbohrung in der Wandung vorzugsweise etwa koaxial zur Längsmittelachse des Bauteils ausgebildet wird. Auf diese Weise wird eine optimale Durchströmung des Bauteils durch das Fluid gewährleistet.

### Zeichnungen

Ausführungsformen der Erfindung sind in der nachfolgenden Beschreibung und in den beigefügten Zeichnungen näher erläutert. Letztere zeigen in schematisch gehaltenen Ansichten:
Fig. 1 einen Längsschnitt durch einen kopfseitigen Teil einer Dieseldüse als Bauteil, wobei erfindungsgemäß während des Verfahrensstadiums des Laserbohrens ein zentraler Hohlraum der Dieseldüse mit einem Fluid ausgefüllt ist, das einen seitlich die Wandung der Dieseldüse durchdringenden Laserstrahl dissipiert,
Fig. 2 die Dieseldüse in einer Ansicht analog Fig. 1, wobei jedoch das Fluid in den Hohlraum erfindungsgemäß mittels einer Lanze eingespritzt wird, die einen das Fluid führenden Hohlkanal aufweist,
Fig. 3 in einer Draufsicht einen Ausschnitt einer aus Metall gebildeten herkömmlichen Schutzvorrichtung 1,
Fig. 4 einen kopfseitigen Teil einer Dieseldüse 3 in Längsschnittdarstellung ohne Schutzvorrichtung,
Figur 5 ein Phasendiagramm einer Gallium-Indium Legierung und
Figur 6 ein Phasendiagramm einer Gallium-Indium-Zinn Legierung.

### Beschreibung der Ausführungsformen

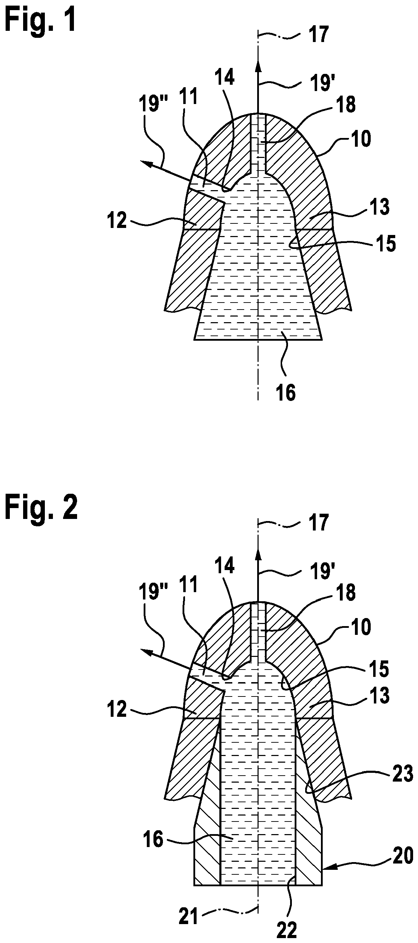

Fig. 1 zeigt ein mittels Laserbohren zu bearbeitendes Bauteil 10, bei dem es sich um den brennraumseitigen Teil einer Dieseldüse bzw. Einspritzdüse handelt. Das Bauteil 10 ist während eines Verfahrensstadiums dargestellt, in welchem ein Laserstrahl mit hoher gepulster Leistung ein Spritzloch bzw. Bohrloch 11 in der Wandung 12 des Bauteils 10 erzeugt. Um die der Wandung 12 gegenüberliegende Wandungsseite 13 vor einer Beschädigung durch den am Ende eines Bohrvorgangs aus der Spritzlochrückseite 14 austretenden Laserstrahl zu schützen, wird erfindungsgemäß in den Hohlraum 15, der von der Wandung begrenzt ist, ein metallisch oder halbmetallisch ausgebildetes Fluid 16 eingespritzt und der Hohlraum 15 damit ausgefüllt. Das eingespritzte Fluid 16 erfüllt dann eine Schutzfunktion gegenüber dem aus der Spritzlochrückseite 14 austretenden Laserstrahl, indem es dessen Energie durch Absorption dissipiert. Das Fluid 16 bildet somit eine Schutzvorrichtung beim Laserbohren.

Damit das Fluid 16 durch das Bauteil 10 durchströmen kann, ist entlang der Längsmittelachse 17 des Bauteils 10 eine dessen Kuppe axial durchsetzende Durchgangsbohrung 18 ausgebildet, die vor dem Einspritzen des Fluids 16 ausgebildet und nach Beenden der Laserbearbeitung wieder mittels Schweißen verschlossen wird, wenn das Fluid 16 dann vollständig aus dem Hohlraum 15 des Bauteils 10 über Strömungspfade 19', 19" abgeführt ist, wobei die Strömungspfade 19', 19" durch die Durchgangsbohrung 18 und durch das gerade erzeugte Bohrloch 11 festgelegt sind. Alternativ dazu kann als einziger Abströmpfad 19" für das Fluid 16 das von dem Laserstrahl durchsetzte Bohrloch bzw. Spritzloch 11 vorgesehen werden.

Fig. 2 zeigt das Bauteil 10 zusammen mit einer Vorrichtung 20, die zur Durchführung des erfindungsgemäßen Verfahrens geeignet ist. Die Vorrichtung 20 ist als Lanze mit einem entlang der Lanzenlängsmittelachse 21 verlaufenden Hohlkanal 22 ausgebildet, der in einer Lanzenspitze 23 ausmündet. Der Hohlkanal 22 dient zum Durchleiten des Fluids 16. Die Lanzenspitze 23 ist zum Einsetzen in eine Öffnung des Hohlraums 15 vorgesehen und ist in ihren Außenabmessungen und ihrer Form so ausgebildet, dass ein passgenaues Einsetzen der Lanzenspitze 23 in die Öffnung des Hohlraums 15 möglich ist, um eine dichte und sichere Ankopplung der Vorrichtung 20 an den Hohlraum 15 des Bauteils 10 sicherzustellen. Dabei fluchtet die Längsmittelachse 17 des Bauteils 10 mit der Lanzenlängsmittelachse 21. Die Vorrichtung 20 kann heizbar oder kühlbar ausgebildet sein, um in Abhängigkeit von dem verwendeten Fluid 16 die gewünschte Einspritztemperatur einzustellen oder konstant zu halten. Die Vorrichtung 20 fungiert dabei als Verbindung zwischen dem Hohlraum 15 des Bauteils 10 und einem für das Fluid 16 vorgesehenen Vorratstank (nicht dargestellt), aus dem verbrauchtes Fluidvolumen mittels Druckbeaufschlagung über die Vorrichtung 20 in den Hohlraum 15 nachführbar ist, um dort eine schnelle Wiederbefüllung zu erzielen.

Um ein geeignetes metallisches Fluid 16 zu bilden, kann ein Metall mit relativ niedrigem Schmelzpunkt bzw. relativ niedriger Schmelztemperatur ausgewählt werden. Die Begriffe Schmelzpunkt und Schmelztemperatur werden inhaltsgleich verwendet. Vorteilhaft ist beispielsweise Gallium verwendbar, ein Element aus der Hauptgruppe III des Periodensystems, da dessen Flüssigphase wegen des Schmelzpunkts von Ts = +30°C in einem günstigen Temperaturbereich liegt, wodurch eine Verflüssigung dieses Metalls bei Raumtemperaturbedingungen möglich ist. Außerdem sind nach Prozessende im Bauteil eventuell vorhandene Gallium-Rückstände relativ leicht entfernbar, indem das entsprechende Bauteil einem Reinigungsschritt in einem alkalischen Ultraschallbad unterzogen wird. Weitere Metalle mit geeignet niedrigem Schmelzpunkt sind Indium aus derselben Hauptgruppe des Periodensystems mit einem Schmelzpunkt von Tₛ = +157°C und Zinn aus der Gruppe IVA des Periodensystems mit einem Schmelzpunkt von Ts = +232°C. Prinzipiell geeignet sind trotz ihrer Toxizität bzw. Reflektivität auch Quecksilber, ein Element aus der Gruppe IIB, der sog. Zink-Gruppe des Periodensystems mit einem Schmelzpunkt von Ts = -39°C wie auch Caesium, ein Alkalimetall aus der Gruppe IA des Periodensystems mit einem Schmelzpunkt von Tₛ = +28.5°C. Andere Metalle aus diesen genannten Gruppen weisen einen zu hohen Schmelzpunkt auf, wie beispielsweise Zink mit einem Schmelzpunkt von Tₛ = +419°C, da deren Schmelzpunkte im Bereich der Restaustenit-Umbildung von zu bearbeitenden Stahl-Bauteilen liegen, so dass die Einleitung eines derart verflüssigten Metalls in den Hohlraum 15 eines Bauteils 10 zu einer unerwünschten Strukturveränderung im Bauteil 10 führen würde.

Erfindungsgemäß ist vorgesehen, als Fluid 16 eine Legierung auszuwählen. Die Wahl einer geeigneten Legierung hängt dabei davon ab, bei welcher Temperatur bzw. in welchem Temperaturbereich die Bearbeitung des Bauteils 10 durch Laserbohren erfolgen soll. So kann für die Bearbeitung ein Temperaturbereich zwischen einer Minimumtemperatur, beispielsweise von 20°C, und einer Maximumtemperatur, beispielsweise von 45°C, vorgegeben sein. Die zu verwendende Legierung sollte in dem zur Bearbeitung vorgegebenen Temperaturbereich flüssig sein, um das Bauteil 10 durchströmen zu können. Mit anderen Worten muss daher die Schmelztemperatur der gewählten Legierung kleiner der Minimumtemperatur sein. Die Minimumtemperatur bildet somit einen vorgegebenen oberen Grenzwert der Schmelztemperatur des Fluides 16 bzw. der Legierung. Die Minimumtemperatur kann je nach Bearbeitungsbedingungen auch anders gewählt sein. Sie kann beispielsweise auch 30°C oder 45°C betragen. Generell ist es für die Bearbeitung des Bauteils 10 vorteilhaft, wenn die Minimumtemperatur im Bereich der Raumtemperatur, also etwa im Bereich zwischen 20°C und 45°C liegt. Dann ist kein besonderer Aufwand erforderlich, um das Fluidmaterial vom festen in den flüssigen Aggregatzustand zu bringen. Bei der Wahl einer für das Fluid 16 geeigneten Legierung spielt auch die Zusammensetzung der Legierung aus den Legierungskomponenten eine Rolle. Eine Legierung weist bei unterschiedlichen Zusammensetzungen unterschiedliche Schmelztemperaturen auf. Im Falle der Auswahl von Legierungen als Fluid für die Schutzvorrichtung beim Laserbohren, bei der es Zusammensetzungen aus den Legierungskomponenten gibt, die eine Schmelztemperatur oberhalb des vorgegebenen oberen Grenzwertes aufweisen, muss geprüft werden, ob es auch Zusammensetzungen der Legierung gibt, deren Schmelztemperatur kleiner oder gleich dem vorgegebenen oberen Grenzwert ist. Grundsätzlich kommen nur solche Zusammensetzungen der Legierung mit einer Schmelztemperatur kleiner oder gleich dem vorgegebenen oberen Grenzwert als Fluid für die Schutzvorrichtung in Frage. Gibt es keine solche Zusammensetzung, so kommt die entsprechende Legierung im Prinzip nicht als Fluid 16 für die Schutzvorrichtung in Frage.

Ob eine Legierung grundsätzlich in Frage kommt, kann daran erkannt werden, ob sie in ihrer eutektischen Zusammensetzung, dem sogenannten Eutektikum, eine Schmelztemperatur kleiner oder gleich dem vorgegebenen oberen Grenzwert aufweist. Wenn ja, dann eignet sich die Legierung und kann insbesondere in ihrer eutektischen Zusammensetzung als Fluid verwendet werden. Andernfalls eignet sie sich prinzipiell nicht als Fluid 16 für die Schutzvorrichtung beim Laserbohren. In ihrer eutektischen Zusammensetzung weist eine Legierung eine minimale Schmelztemperatur auf. Im Falle der Eignung der Legierung gibt es in der Regel einen Bereich für die Legierungszusammensetzung, in dem die zugeordnete Schmelztemperatur kleiner oder gleich dem vorgegebenen oberen Grenzwert ist. Sämtliche Legierungszusammensetzungen in diesem Bereich sind daher als Fluid 16 geeignet.

Auch Legierungszusammensetzungen, deren Schmelztemperatur oberhalb des vorgegebenen oberen Grenzwertes liegen, können als Fluid 16 geeignet sein, solange sie bei der Temperatur des vorgegebenen oberen Grenzwertes eine Schmelze mit festen Bestandteilen aufweisen, deren Durchmesser kleiner als der minimale Durchmesser in einem Leitungssystem zum Bereitstellen und zur Abfuhr des Fluids 16 ist. In den Figuren 1 und 2 ist ein Teil dieses Leitungssystems dargestellt, umfassend den Hohlraum 15 bzw. den Hohlkanal 22, die Durchgangsbohrung 18 und das Bohrloch 11. Der minimale Durchmesser wird dabei durch die Durchgangsbohrung 18 oder das Bohrloch 11 festgelegt, sofern im nicht dargestellten Teil des Leitungssystems nicht noch kleinere Durchmesser vorliegen. Der typische Durchmesser eines Bohrlochs 11 bei einer Einspritzdüse beträgt beispielsweise etwa 100µm.

Konkret kommen beispielsweise Gallium-Legierungen als Fluid 16 für die Schutzvorrichtung beim Laserbohren in Frage. Besonders geeignet sind dabei binäre oder ternäre Gallium-Legierungen. Binäre Gallium-Legierungen weisen neben Gallium noch ein weiteres Element auf. Ternäre Gallium-Legierungen weisen neben Gallium noch zwei weitere Elemente auf.

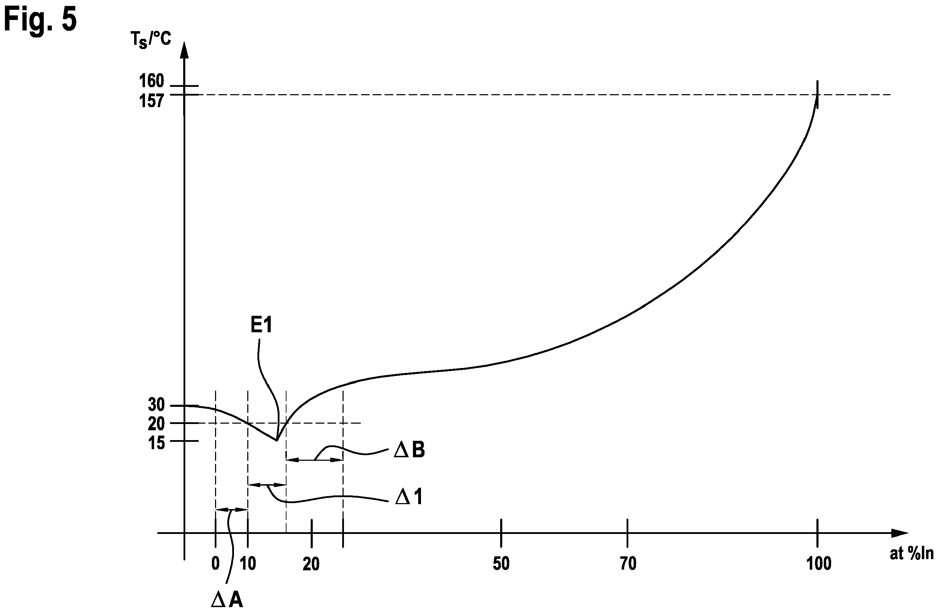

Ein Beispiel für eine als Fluid 16 geeignete binäre Gallium-Legierung ist eine Gallium-Indium-Legierung Galn. Ihr Phasendiagramm ist in Figur 5 wiedergegeben. Dabei sind die Schmelztemperatur Ts auf der Ordinate und die Zusammensetzung der Legierung in Atomprozent (at%) Indium auf der Abszisse aufgetragen. Die im Folgenden verwendeten Prozentangaben zur Kennzeichnung der jeweils referenzierten Legierungszusammensetzung sind als Atomprozent angegeben. Das Eutektikum E1 von Galn liegt bei etwa 86% Gallium und 14% Indium, also Galn14, und weist eine Schmelztemperatur von etwa 15°C auf. In dieser Zusammensetzung der Galn-Legierung ist die Schmelztemperatur minimal. Eingetragen ist auch die Schmelztemperatur von reinem Gallium von etwa 30°C und von reinem Indium von etwa 157°C. Am Beispiel des vorgegebenen oberen Grenzwertes bzw. der Minimumtemperatur von 20°C ist im Phasendiagramm nach Figur 5 auch ein erster Bereich Δ1 der Legierungszusammensetzungen zwischen etwa 10% Legierungsanteil Indium, also Galn10 und etwa 16% Legierungsanteil Indium, also Galn16, eingetragen, deren Schmelztemperatur kleiner oder gleich 20°C ist und die daher als Fluid 16 gewählt werden können.

Im Phasendiagramm nach Figur 5 ist benachbart dem ersten Bereich Δ1 zu größeren Galliumanteilen hin ein zweiter Bereich ΔA der

Legierungszusammensetzungen eingetragen, bei dem die Schmelztemperatur oberhalb des vorgegebenen oberen Grenzwertes liegt, in dem aber noch eine Schmelze mit festen Bestandteilen überwiegend aus Gallium in Form von Kristallen vorliegt, deren Durchmesser kleiner als der minimale Durchmesser des Leitungssystems ist. Der zweite Bereich ΔA ist dabei lediglich qualitativ eingezeichnet und kann ebenfalls als Fluid 16 gewählt werden.

Entsprechend ist benachbart dem ersten Bereich Δ1 zu größeren Indiumanteilen hin ein dritter Bereich ΔB der Legierungszusammensetzungen im Phasendiagramm nach Figur 5 eingetragen, bei dem die Schmelztemperatur ebenfalls oberhalb des vorgegebenen oberen Grenzwertes liegt, in dem aber wiederum noch eine Schmelze mit festen Bestandteilen überwiegend aus Indium in Form von Kristallen vorliegt, deren Durchmesser kleiner als der minimale Durchmesser des Leitungssystems ist. Der dritte Bereich ΔB ist dabei ebenfalls lediglich qualitativ eingezeichnet und kann ebenfalls als Fluid 16 gewählt werden.

Die Bereiche ΔA und ΔB können experimentell abhängig vom zur Verfügung stehenden minimalen Durchmesser des Leitungssystems ermittelt werden.

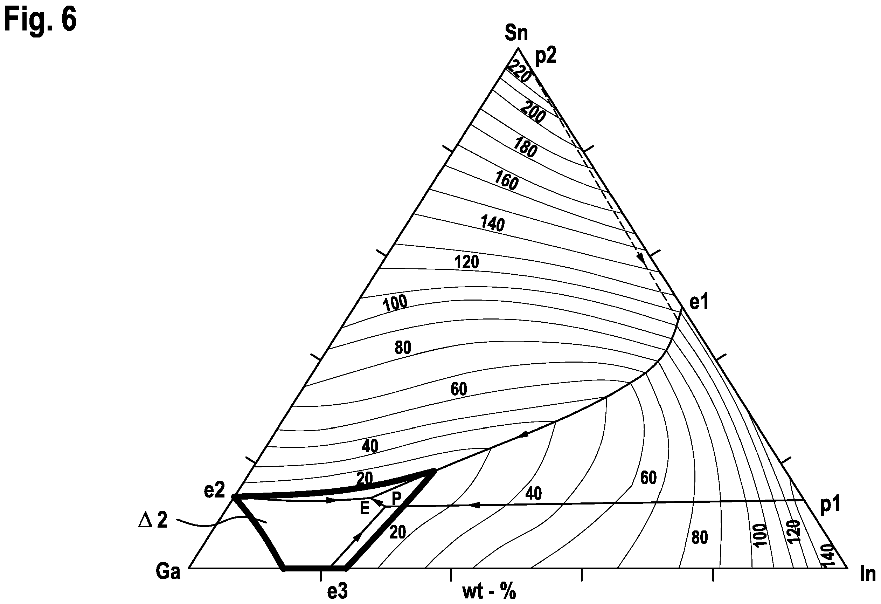

Ein Beispiel für eine als Fluid 16 geeignete ternäre Gallium-Legierung ist eine Gallium-Indium-Zinn Legierung GalnSn. Ihr Phasendiagramm ist in Figur 6 wiedergegeben. Dabei sind verschiedene Schmelztemperaturen als Isothermen im Phasendiagramm eingetragen. Die Achsen des Phasendiagramms geben in diesem Fall Gewichtsprozente (wt-%) der Legierungsbestandteile an. Die im Folgenden verwendeten Prozentangaben zur Kennzeichnung der jeweils referenzierten Legierungszusammensetzung sind als Gewichtsprozent angegeben. Im ternären Eutektikum bei etwa 68 bis 69% Gallium, 21 bis 22% Indium und 9 bis 11% Zinn ergibt sich eine Schmelztemperatur von etwa -19°C. In dieser Zusammensetzung der GalnSn-Legierung ist die Schmelztemperatur minimal. Am Beispiel des vorgegebenen oberen Grenzwertes bzw. der Minimumtemperatur von 20°C ist im Phasendiagramm nach Figur 6 auch ein vierter Bereich Δ2 der Legierungszusammensetzungen von GalnSn dick umrandet eingetragen, deren Schmelztemperatur kleiner oder gleich 20°C ist und die daher als Fluid 16 gewählt werden können.

Die gewählte Legierung bzw. Legierungszusammensetzung wird dann vor dem Einspritzvorgang in einen flüssigen Aggregatzustand durch Aufschmelzen gebracht. Bei geeignet gewähltem vorgegebenem oberen Grenzwert bzw. geeignet gewählter Minimumtemperatur im Bereich der Raumtemperatur, beispielsweise bei 20°C, erfolgt das Aufschmelzen ohne zusätzliche Heizmaßnahmen.

Das Fluid 16 wird für die Dauer der Laserbearbeitung durch den Hohlraum 15 am entsprechenden Bohrloch 11 vorbeigeführt. Dabei trifft der Laserstrahl, wenn er aus der Rückseite 14 des Bohrlochs 11 austritt, auf das dort im Hohlraum 15 axial in Richtung der Durchgangsbohrung 18 abströmende Fluid 16 und wird absorbiert. Das durch den Hohlraum 15 strömende Fluid 16 wirkt dadurch energiedissipierend.

Zusammenfassend dient das erfindungsgemäße Verfahren zum Laserbohren eines Bauteils, insbesondere einer Einspritzdüse, welche einen Hohlraum 15 aufweist, und umfasst die Verfahrenschritte des Bildens eines metallisch ausgebildeten Fluids 16, des Einspritzens des Fluids 16 in den Hohlraum 15, des Bohrens eines Lochs 11 in eine den Hohlraum 15 begrenzende Wandung 12 des Bauteils 10 mittels wenigstens eines Laserstrahls, wobei der Laserstrahl bzw. dessen Energie nach Ausbilden des Lochs 11 von dem metallisch ausgebildeten Fluid 16 absorbiert bzw. dissipiert wird, und des Abführens des Fluids 16 aus dem Hohlraum 15 nach Beenden des Laserbohrens. Das Fluid 16 kann dabei durch den Hohlraum 15 zirkulieren, wodurch eine ständige Regeneration des Fluids 16 ermöglicht wird. Durch Nachführen des Fluids 16 ist selbst bei kleinem Rückraumvolumen ein praktisch beliebig großes Schutzvolumen erzielbar. Das Fluid 16 ist als Legierung ausgebildet.

## Patentansprüche

1. Verfahren zum Laserbohren eines Bauteils, insbesondere einer Einspritzdüse, welches einen Hohlraum aufweist, mit folgenden Verfahrensschritten:
- Bilden eines metallisch ausgebildeten Fluids (16) in Form eines flüssigen Metalls,
- Einspritzen des Fluids (16) in den Hohlraum (15),
- Bohren eines Lochs (11) in eine den Hohlraum (15) begrenzende Wandung (12) des Bauteils (10) mittels wenigstens eines Laserstrahls, wobei der Laserstrahl nach Ausbilden des Lochs (11) von dem Fluid (16) absorbiert wird, und
- Abführen des Fluids (16) aus dem Hohlraum (15) nach Beenden des Laserbohrens, **dadurch gekennzeichnet, dass** als Fluid eine Legierung ausgewählt wird.

2. Verfahren nach Anspruch 1, **dadurch gekennzeichnet, dass** die Zusammensetzung der Legierung abhängig von einem vorgegebenen oberen Grenzwert der Schmelztemperatur des Fluides gewählt wird.

3. Verfahren nach Anspruch 2, **dadurch gekennzeichnet, dass** der vorgegebene obere Grenzwert nicht größer als 45°C, vorzugsweise nicht größer als 30°C, insbesondere nicht größer als 20°C, gewählt wird.

4. Verfahren nach Anspruch 2 oder 3, **dadurch gekennzeichnet, dass** die Zusammensetzung der Legierung im Bereich ihres Eutektikums gewählt wird.

5. Verfahren nach einem der vorherigen Ansprüche, **dadurch gekennzeichnet, dass** die Zusammensetzung der Legierung abhängig von einem minimalen Durchmesser in einem Leitungssystem zum Bereitstellen und zur Abfuhr des Fluids (16) gewählt wird.

6. Verfahren nach einem der vorherigen Ansprüche, **dadurch gekennzeichnet, dass** als Legierung eine Gallium-Legierung gewählt wird.

7. Verfahren nach Anspruch 6, **dadurch gekennzeichnet, dass** die Gallium-Legierung als binäre Gallium-Legierung gewählt wird.

8. Verfahren nach Anspruch 7, **dadurch gekennzeichnet, dass** als binäre Gallium-Legierung eine Gallium-Indium-Legierung ausgewählt wird.

9. Verfahren nach Anspruch 6, **dadurch gekennzeichnet, dass** die Gallium-Legierung als ternäre Gallium-Legierung gewählt wird.

10. Verfahren nach Anspruch 9, **dadurch gekennzeichnet, dass** als ternäre Gallium-Legierung eine Gallium-Indium-Zinn-Legierung ausgewählt wird.

11. Verfahren nach einem der vorherigen Ansprüche, **dadurch gekennzeichnet, dass** die Legierung vor dem Einspritzvorgang in einen flüssigen Aggregatzustand durch Aufschmelzen gebracht wird.

12. Verfahren nach einem der vorherigen Ansprüche, **dadurch gekennzeichnet, dass** vor dem Einspritzvorgang wenigstens eine Durchgangsbohrung (18) in die Wandung (12) des Bauteils (10) ausgebildet wird, welche zum Durchführen des Fluids (16) durch den Hohlraum (15) dient und nach Beenden des Laserbohrens wieder verschlossen wird.

13. Verfahren nach Anspruch 12, **dadurch gekennzeichnet, dass** die Durchgangsbohrung (18) in der Wandung (12) vorzugsweise etwa koaxial zur Längsmittelachse (17) des Bauteils (10) ausgebildet wird.

## Claims

1. Method for laser drilling a component, in particular an injection nozzle which has a hollow space, comprising the following method steps:
- forming a metallic fluid (16) in the form of a liquid metal,
- injecting the fluid (16) into the hollow space (15),
- drilling a hole (11), by means of at least one laser beam, in a wall (12) of the component (10) delimiting the hollow space (15), the laser beam being absorbed by the fluid (16) once the hole (11) has been formed, and
- discharging the fluid (16) from the hollow space (15) once the laser drilling is completed, **characterized in that** an alloy is chosen as the fluid.

2. Method according to Claim 1, **characterized in that** the composition of the alloy is chosen dependent on a predetermined upper limit value of the melting temperature of the fluid.

3. Method according to Claim 2, **characterized in that** the predetermined upper limit value is chosen to be not greater than 45°C, preferably not greater than 30°C, in particular not greater than 20°C.

4. Method according to Claim 2 or 3, **characterized in that** the composition of the alloy is chosen in the region of its eutectic.

5. Method according to one of the preceding claims, **characterized in that** the composition of the alloy is chosen dependent on a minimum diameter in a system of lines for providing and removing the fluid (16).

6. Method according to one of the preceding claims, **characterized in that** a gallium alloy is chosen as the alloy.

7. Method according to Claim 6, **characterized in that** the gallium alloy is chosen as a binary gallium alloy.

8. Method according to Claim 7, **characterized in that** a gallium-indium alloy is chosen as the binary gallium alloy.

9. Method according to Claim 6, **characterized in that** the gallium alloy is chosen as a ternary gallium alloy.

10. Method according to Claim 9, **characterized in that** a gallium-indium-tin alloy is chosen as the ternary gallium alloy.

11. Method according to one of the preceding claims, **characterized in that**, before the injecting operation, the alloy is brought into a liquid state of aggregation by melting.

12. Method according to one of the preceding claims, **characterized in that**, before the injecting operation, at least one through-hole (18), which serves for passing the liquid (16) through the hollow space (15) and is closed again after the laser drilling is completed, is formed in the wall (12) of the component (10).

13. Method according to Claim 12, **characterized in that** the through-hole (18) in the wall (12) is preferably formed approximately coaxially in relation to the longitudinal centre axis (17) of the component (10).

## Revendications

1. Procédé de perçage laser d'un composant, notamment d'une buse d'injection, qui comporte une cavité, ledit procédé comportant les étapes suivantes :
- former un fluide métallique (16) sous la forme d'un métal liquide,
- injecter le fluide (16) dans la cavité (15),
- percer un trou (11) dans une paroi (12) du composant (10), laquelle délimite la cavité (15), au moyen d'au moins un faisceau laser, le faisceau laser étant absorbé par le fluide (16) après que le trou (11) a été formé, et
- évacuer le fluide (16) de la cavité (15) une fois le perçage laser terminé, **caractérisé en ce qu'**un alliage est choisi comme fluide.

2. Procédé selon la revendication 1, **caractérisé en ce que** la composition de l'alliage est choisie en fonction d'une valeur limite supérieure spécifiée de la température de fusion du fluide.

3. Procédé selon la revendication 2, **caractérisé en ce que** la valeur limite supérieure spécifiée est choisie comme étant non supérieure à 45 °C, de préférence non supérieure à 30 °C, en particulier non supérieure à 20 °C.

4. Procédé selon la revendication 2 ou 3, **caractérisé en ce que** la composition de l'alliage est choisie dans la gamme de son eutectique.

5. Procédé selon l'une des revendications précédentes, **caractérisé en ce que** la composition de l'alliage est choisie en fonction d'un diamètre minimum dans un système de conduites d'amenée et d'évacuation du fluide (16).

6. Procédé selon l'une des revendications précédentes, **caractérisé en ce qu'**un alliage de gallium est choisi comme alliage.

7. Procédé selon la revendication 6, **caractérisé en ce que** l'alliage de gallium est choisi sous la forme d'un alliage de gallium binaire.

8. Procédé selon la revendication 7, **caractérisé en ce qu'**un alliage gallium-indium est choisi comme alliage de gallium binaire.

9. Procédé selon la revendication 6, **caractérisé en ce que** l'alliage de gallium est choisi comme alliage de gallium ternaire.

10. Procédé selon la revendication 9, **caractérisé en ce qu'**un alliage gallium-indium-étain est choisi comme alliage de gallium ternaire.

11. Procédé selon l'une des revendications précédentes, **caractérisé en ce que** l'alliage est amené dans un état d'agrégation liquide par fusion avant le processus d'injection.

12. Procédé selon l'une des revendications précédentes, **caractérisé en ce que**, avant le processus d'injection, au moins un trou traversant (18), qui sert au passage du fluide (16) à travers la cavité (15) et qui est refermé une fois le perçage laser terminé, est ménagé dans la paroi (12) du composant (10).

13. Procédé selon la revendication 12, **caractérisé en ce que** le trou traversant (18) est ménagé dans la paroi (12) de préférence à peu près coaxialement à l'axe médian longitudinal (17) du composant (10).
